# EUROPÄISCHE PATENTSCHRIFT

(11) **EP 0 502 378 B1**
(45) Veröffentlichungstag und Bekanntmachung des Hinweises auf die Patenterteilung: **08.11.1995**
(21) Anmeldenummer: 92102920.3
(22) Anmeldetag: 21.02.1992
(51) Int. Cl.: B29C 33/04, B29C 41/46

(54) **Vorrichtung und Verfahren zum Herstellen von Formhäuten und -körpern aus Kunststoff**
Apparatus and method to produce synthetic material skins and objects from plastic
Dispositif et procédé pour la production de peaux moulées et de corps en matière plastique

(30) Priorität: 05.03.1991 DE 4106964
(43) Veröffentlichungstag der Anmeldung: 09.09.1992
(73) Patentinhaber: PEGUFORM-WERKE GMBH, 79268 Bötzingen (DE)
(72) Erfinder: Pallerberg, Wilfried, W-7805 Bötzingen (DE); Lackmann, Detlef, W-7835 Teningen Köndringen (DE)
(74) Vertreter: Blumbach, Kramer & Partner

(56) Entgegenhaltungen:
- DE-A- 1 779 208
- DE-A- 1 943 151
- FR-A- 2 361 213
- GB-A- 149 502
- GB-A- 1 159 327
- US-A- 4 851 177

## Beschreibung

Die Erfindung betrifft eine Vorrichtung zum Herstellen von Formhäuten und -körpern aus Kunststoff nach dem Oberbegriff des Anspruchs 1 sowie ein Herstellungsverfahren und Verwendung einer solchen Vorrichtung.

Vorrichtungen und Verfahren zum Herstellen von Formhäuten sind bekannt. Solche Verfahren werden auch unter dem Begriff "Rotationsgießen" zusammengefaßt. Dabei werden Formen, die im allgemeinen auf galvanische Weise durch Abscheiden von Metallen erzeugt werden, mit einem rieselfähigen Kunststoff oder auch einem flüssigen Kunststoff gefüllt. Unter Zufuhr von Wärme haftet eine dünne Kunststoffschicht an der Formoberfläche an und das restliche Kunststoffmaterial kann durch Drehen der Form ausgeschüttet oder ausgegossen werden. Beim weiteren Erhitzen der Form geliert die anhaftende Haut aus oder vernetzt bei Verwendung reaktiver Materialien. Nach dem Abkühlen der Form kann die fertige Haut entnommen werden. Das Einfüllen des rieselfähigen Kunststoffmaterials in Form von Pulver oder Granulat geschieht durch Aufsetzen der mit ihrer Öffnung nach unten gedrehten Form auf einen Kasten, der das Kunststoffmaterial enthält. Die aus der Form und dem Kasten bestehende Einheit wird anschließend um 180° gedreht, so daß das Kunststoffmaterial in die Form fällt. Nach dem Angelieren einer Kunststoffhaut kann die Einheit wieder zurückgedreht werden.

Das Zuführen von Wärme erfolgt durch Einschieben der Form in eine Heißluftkammer mit genau geregelter Temperatur. Es dauert dabei jedoch verhältnismäßig lange, bis die Form genügend erhitzt ist. Gleiches gilt für das anschließende Abkühlen. Ein Verfahren sowie eine Vorrichtung der vorstehend beschriebenen Art sind beispielsweise aus der DE-PS 34 17 727 bekannt.

Zur Vermeidung von Heißluftkammern oder Öfen und damit zur Beschleunigung des Aufheizens und Abkühlens der Form ist auch bereits eine doppelwandige Form benutzt worden (GB-PS 1 159 327). In den Zwischenraum zwischen den beiden Wänden der Form wird zum Aufheizen und Abkühlen heißes bzw. kaltes Öl eingepumpt.

Der Erfindung liegt die Aufgabe zugrunde, die vorgenannte Vorrichtung bzw. das entsprechende Verfahren so weiter zu entwickeln, daß insbesondere auch die Herstellung komplizierter Gegenstände auch mit unterschiedlichen Wandstärken möglich wird. Die Lösung der Aufgabe ist im Patentanspruch 1 angegeben. Ein zugehöriges Verfahren ist Gegenstand des Anspruchs 9.

Durch die Vielzahl von Einlauföffnungen für das Heiz- und Kühlmedium, beispielsweise Öl, und deren parallele Anschaltung an ein Zulaufsystem kann die Form sehr schnell und über die gesamte Fläche gleichmäßig und gleichzeitig aufgeheizt bzw. abgekühlt werden. Da der Gesamtablaufquerschnitt durch entsprechende Bemessung der Auslauföffnungen größer als der Zulaufquerschnitt ist, bleibt die Form selbst drucklos, so daß keine zusätzliche Belastung und Verformung auftritt.

Weiterbildungen der Erfindung sind Gegenstand der Unteransprüche. So kann vorgesehen sein, daß die Einlauföffnungen als Spritzdüsen ausgebildet sind, die auf die Innenseite der Vorderwand gerichtet sind. Die Zahl und Anordnung der Einlauföffnungen oder -düsen kann unter Berücksichtigung der jeweiligen Formeigenschaften gewählt werden. Wenn beispielsweise die Formwand aufgrund der Herstellung auf galvanischem Wege nicht vermeidbare Wanddickenunterschiede besitzt, so kann die Zufuhr des Heiz- und Kühlmediums an diesen Stellen konzentriert werden.

Die die Formgebung bewirkende Vorderwand, die wegen ihrer bevorzugten Herstellung im galvanischen Verfahren auch als "Galvano" bezeichnet wird, ist zweckmäßig auswechselbar an der Rückwand der Form befestigt. Dann besteht die Möglichkeit, bei Änderungen der Form nur das Galvano auszuwechseln. Entsprechendes gilt bei einer Beschädigung.

Um die Form in an sich bekannter Weise bequem drehen zu können, sieht eine Weiterbildung vor, daß die Form mit dem Zulauf- und Ablaufsystem sowie dem Kasten mit dem Kunststoffmaterial in einem um eine horizontale Achse drehbaren Rahmen angeordnet sind. Die Zuführung und Abführung des Heiz- und Kühlmediums von außen zum Zulauf- bzw. vom Ablaufsystem in der Form geschieht mit Vorteil über Drehkupplungen im Bereich der Drehlager des Rahmens.

Zur gleichmäßigen Verteilung des Kunststoffmaterials in der Form unter Erreichung auch hinterschnittener und komplizierter Formstellen ist nur die Form, die einen Tragrahmen besitzt, während der Drehung in Richtung der Drehachse hin- und herbewegbar. Die daran befestigten Zuleitungen und Ableitungen sind dazu beweglich ausgeführt. Dabei können die Einlauf- und Auslauföffnungen einzeln über je eine bewegliche Leitung, z.B. Schläuche, mit dem Zulauf- bzw. Ablaufsystem verbunden sein. Zur Begrenzung der Zahl der beweglichen Leitungen besteht aber auch die Möglichkeit, daß die Einlauf- und Auslauföffnungen zunächst über starre Leitungen mit je einem oder auch mehreren Zwischenrohren verbunden sind, die dann über bewegliche Leitungen zu dem Zulauf- bzw. Ablaufsystem führen. Vorteilhaft ist in beiden Fällen, daß nicht die gesamte Masse der Anlage mitbewegt werden muß. Die Bewegungsgeschwindigkeit, die Amplitude, das Bewegungsprofil und die Frequenz sind frei wählbar. Zusätzlich kann der Rahmen mittels einer Hubvorrichtung um die Querachse schwenkbar ausgeführt sein.

Ein Verfahren zur Herstellung von Formhäuten und -körpern unter Verwendung einer Vorrichtung nach der Erfindung sieht vor, daß das Ansetzen des Kastens an die Form, das Verschwenken und gegebenenfalls translatorische Bewegungen der Form in Axial- und Vertikalrichtung sowie das Temperaturprofil des Heiz- und Kühlmediums mit frei programmierbarer Steuerung durchgeführt werden. Beliebige Bewegungs- und Temperaturprogramme können so erstellt und kombiniert werden. Dann lassen sich einmal gefundene, zweckmäßige Werte exakt reproduzieren und eine gleichmäßige Fertigung erreichen.

Nachfolgend wird ein Ausführungsbeispiel anhand der Zeichnungen beschrieben. Es zeigen:
Fig. 1 schematisch eine teilweise geschnittene Vorderansicht einer Vorrichtung nach der Erfindung;
Fig. 2 einen Teilausschnitt der bei der Vorrichtung nach Fig. 1 verwendeten Form im Bereich einer Einspritzdüse;
Fig. 3 einen Teilausschnitt ähnlich Fig. 2 im Bereich einer Auslauföffnung;
Fig. 4 schematisch die Verteilung von Einlauf- und Auslauföffnungen in der Form.

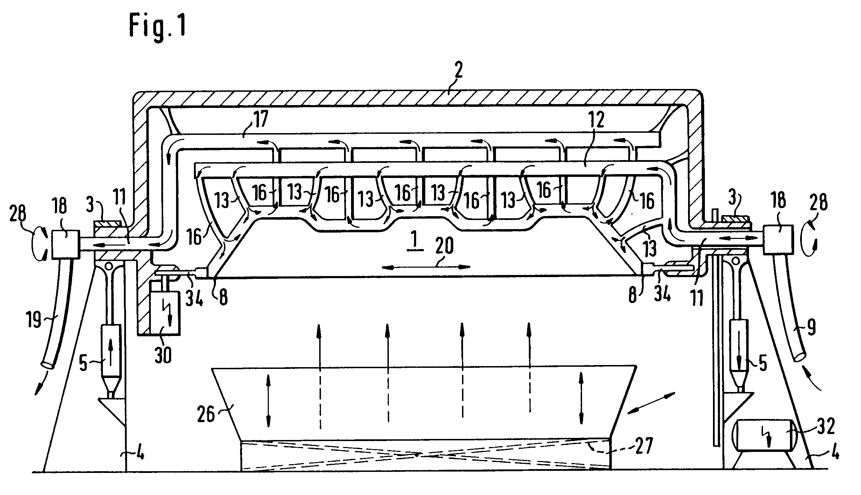

Bei der Vorrichtung nach Fig. 1 ist eine Form 1 in einem Rahmen 2 verschiebbar befestigt und der Rahmen 2 drehbar gelagert. Die Lager 3 werden von Ständern 4 getragen und lassen sich mit Hilfe von nur angedeuteten Hydraulikzylindern 5 in der durch Doppelpfeile angedeuteten Richtung gegenläufig nach oben und unten bewegen. Die Form 1 besitzt eine der Formgebung dienende Innenwand 6, die auch als Galvano bezeichnet wird, und in geringem Abstand von beispielsweise 10 bis 20 mm eine Rückwand 7. Die beiden Wände sind mittels eines Tragrahmens 8 abgedichtet und so miteinander verbunden, daß das Galvano 6 ausgewechselt werden kann. Der Tragrahmen 8 dient gleichzeitig der Befestigung im Drehrahmen 2, wobei die Befestigung eine Bewegung des Tragrahmens 8 in Richtung der Drehachse (Pfeil 20) erlaubt.

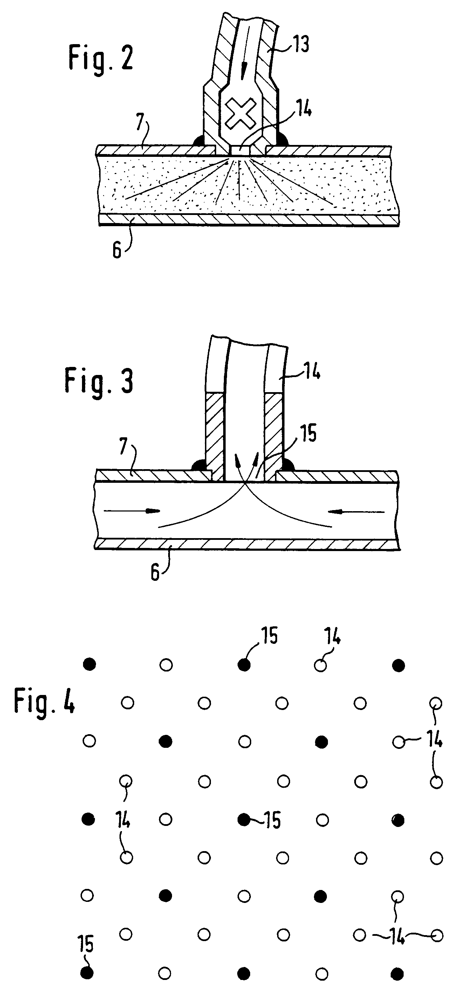

Die Zuführung des Heiz- und Kühlmediums erfolgt von einer nicht dargestellten Heiz- und Kühlanlage mit ausreichender Heiz- und Kühlleistung über eine Leitung 9 durch eine Drehkupplung 18 und ein Rohr 11 zum Zulaufsystem in Form eines Sammelrohres 12. Vom Sammelrohr 12 führen bewegliche Einzelleitungen 13 zu Einlauföffnungen 14 in Form von Einspritzdüsen, die in Fig. 2 genauer dargestellt sind. Zum Ablauf des Mediums dienen Auslauföffnungen 15, von denen bewegliche Verbindungsleitungen 16 zu einem weiteren Sammelrohr 17 führen, das wiederum über eine Drehkupplung 18 und eine Leitung 19 an die nicht dargestellte Heiz- und Kühlanlage angeschlossen ist. Diese enthält zweckmäßig und in an sich bekannter Weise Wärmetauscher, so daß der Energieaufwand klein bleiben kann.

Entsprechend der Darstellung in Fig. 3 sind die Auslauföffnungen 15 im Querschnitt wesentlich größer als die Einlauföffnungen oder Spritzdüsen 14. Auch wenn die Zahl der Auslauföffnungen 15 kleiner ist (Fig. 4) als die der Spritzdüsen 14, so ist trotzdem der Gesamtauslaufquerschnitt wesentlich größer als der Gesamtzulaufquerschnitt, wodurch der Druck des Heiz- und Kühlmediums im Raum zwischen den Wänden 6 und 7 klein bleibt. Dadurch werden Verformungen insbesondere des Galvanos 6 und damit Änderungen der Form vermieden.

Ein Beispiel für die Anordnung und Verteilung der Einlauföffnungen 14 und Auslauföffnungen 15 ist in Fig. 4 schematisch dargestellt. Die Verteilung der Öffnungen 14, 15 kann zum Ausgleich unterschiedlicher Wandstärken des Galvanos 6 oder auch gewünschter Effekte auf das jeweilige Werkstück unsymmetrisch sein. Beispielsweise lassen sich an Stellen, die eine höhere Wärmezuleitung bzw. -ableitung benötigen, dichter beieinander angeordnete Einlauföffnungen 14 anbringen.

Der das pulverförmige Kunststoffmaterial enthaltende Kasten 26 ist in Fig. 1 ebenfalls nur schematisch gezeigt. Er kann, wie gestrichelt angedeutet, auch zwei oder mehrere Ableitungen für Kunststoffmaterial unterschiedlicher Farbe oder unterschiedlicher Materialien enthalten, so daß sich entsprechend unterschiedliche Bereiche aufweisende Teile herstellen lassen. Der Kasten 26 wird mittels einer Hebevorrichtung 27 in Richtung auf die Form bewegt und dort nach dem Andocken am Tragrahmen 8 abgedichtet befestigt. Er kann dann zusammen mit dem Drerahmen 2 und der Form 1 gedreht werden (Pfeile 28), wobei das Kunststoffmaterial die Form 1 füllt.

Wenn die Hebevorrichtung 27, die außerdem auch ein Verfahren des Kastens 26 ermöglichen kann, präzise ausgestaltet ist, kann in Verbindung mit der durch den Tragrahmen 8 und zusätzliche Bauteile genau fixierten und gehaltenen Rückwand 7 und damit des Galvanos 6 eine große Wiederholgenauigkeit für das Ankoppeln und auch Wechseln des Kastens 26 und gegebenenfalls weiterer Kästen erreicht werden. Dadurch wird auch das Einfahren des Kastens 26 oder von bestimmten Kastenbereichen in das Galvano und das Abdichten auch bei einer sehr komplizierten Kontur ermöglicht.

Das Aufheizen der Form kann mit voller Leistung schnellstmöglich schon vor dem Andocken des Kastens 26 eingeleitet werden. Zur Erhöhung der Geschwindigkeit kann zu Anfang kurzfristig auch die gewünschte Reaktionsendtemperatur überschritten werden. Nach Erreichen der gewünschten Temperatur von beispielsweise 240°C beginnt ein Bewegungsprogramm. Dazu wird zunächst der Rahmen 2 mit der Form 1 zum Umschütten des Kunststoffmaterials aus dem Kasten in die Form 1 gedreht, wie bereits erläutert. Abhängig von der jeweiligen Form wird nach einem vorher empirisch ermittelten Programm zusätzlich eine Kippbewegung mittels der Zylinder 5 sowie auch eine translatorische Bewegung in Richtung der Drehachse entsprechend dem Doppelpfeil 20 durch den Motor 30 überlagert. Auch der Drehwinkel und die Drehgeschwindigkeit sowie das Vor- oder Rückdrehen folgen einem bestimmten Programm. Gleiches gilt für die Zahl der Drehungen und die jeweilige Zykluslänge. Auf diese Weise können auch sehr komplizierte Formgeometrien gleichmäßig mit Kunststoffpulver oder auch einer Flüssigkeit gefüllt werden.

Während der Formbewegungen schmilzt der Kunststoff an der Formwand 6 an, wobei gegebenenfalls auch eine Reaktion in Form einer Vernetzung auftritt. Die dabei erforderlichen Wärmemengen werden durch entsprechende Temperaturregelung des Heizmediums bereitgestellt derart, daß die Wand 6 die günstigste Temperatur behält. Zur Regelung der Temperatur wird dabei die Temperatur des ablaufenden Mediums gemessen.

Nach einer ebenfalls empirisch festgestellten Zeit, die vom jeweiligen Kunststoffmaterial und auch der gewünschten Wanddicke abhängt, dreht man den Rahmen 2 mit der Form 1 und dem Kasten 26 zurück, so daß das überschüssige Kunststoffmaterial sich wieder im Kasten 26 sammelt. Das Zurückfließen kann dabei durch ebenfalls programmierte Dreh- und Hubbewegungen unterstützt werden. Anschließend wird die Temperatur der Form so eingeregelt, daß entweder ein Nachgelieren des angeschmolzenen Kunststoffmaterials (bei Thermoplasten) oder auch eine Nachreaktion (bei reaktivem Kunststoffmaterial) bewirkt wird. Auch hier kann wiederum die Gesamteinheit ein Drehprogramm ausführen, um ein Abtropfen von flüssigem Material zu verhindern. Gleichzeitig wird dabei der Kasten 26 nach dem Abkoppeln zurückgefahren. Abschließend erfolgt das Abkühlen der Form 1 mit voller Kühlleistung und danach die Entnahme des jeweils hergestellten Teils.

Die nicht im einzelnen dargestellte Einrichtung zur Ausführung der Drehbewegung weist einen regelbaren Drehmotor 32 und eine durch den Motor 30 betriebene Schiebevorrichtung 34 zum translatorischen Hin- und Herbewegen des Tragahmens 8 in Richtung des Doppelpfeils 20 auf. Die Drehbewegung ist dabei frei einstellbar, so daß Drehprogramme mit beliebigen Geschwindigkeitsprofilen, Drehrichtungen und Zwischenstops in einem Bereich von über 360° möglich sind. Die translatorischen Bewegungen und auch die Hubbewegungen lassen sich mit einstellbaren Amplituden, Geschwindigkeiten und Bewegungsprofilen unabhängig von den Drehbewegungen programmiert wählen.

## Patentansprüche

1. Vorrichtung zur Herstellung von Formhäuten und -körpern aus Kunststoff mit einer vorzugsweise als Galvano hergestellten Form, deren Innenkontur die Formgebung bewirkt und die als doppelwandiger Hohlkörper (1) zur Zufuhr eines Heiz- und Kühlmediums ausgebildet ist, einem abdichtend auf die Form (1) aufsetzbaren Kasten (26), der Kunststoffmaterial als Pulver, Granulat oder Flüssigkeit enthält, und einer Vorrichtung zum Drehen der Form (1) und des Kastens (26), **dadurch gekennzeichnet,** daß der doppelwandige Hohlkörper an seiner der Innenkontur (6) abgewandten Rückwand (7) eine Vielzahl von Einlauf- und Auslauföffnungen (14, 15) für das Heiz- und Kühlmedium aufweist,
daß die Einlauföffnungen (14) einerseits und die Auslauföffnungen (15) andererseits jeweils parallel an ein Zulaufsystem (12) bzw. Auslaufsystem (17) angeschlossen sind und
daß der Gesamtauslaufquerschnitt größer als der Gesamtzulaufquerschnitt ist.

2. Vorrichtung nach Anspruch 1,
dadurch gekennzeichnet, daß die Einlauföffnungen als Spritzdüsen (Fig. 2:14) ausgebildet sind, die auf die Innenseite der Vorderwand (6) gerichtet sind.

3. Vorrichtung nach Anspruch 1 oder 2,
dadurch gekennzeichnet, daß die Anordnung der Einlauföffnungen (14) unregelmäßig ist.

4. Vorrichtung nach einem der Ansprüche 1 bis 3, dadurch gekennzeichnet, daß die die Formgebung bewirkende Vorderwand (6) auswechselbar an der Rückwand (7) der Form (1) befestigt ist.

5. Vorrichtung nach einem der Ansprüche 1 bis 4, dadurch gekennzeichnet, daß die Form (1) mit dem Zulauf- und Ablaufsystem (12 bis 17) sowie dem Kasten (26) mit dem Kunststoffmaterial in einem um eine horizontale Achse drehbaren Drehrahmen (2) angeordnet sind.

6. Vorrichtung nach Anspruch 5,
dadurch gekennzeichnet, daß die Zuführung und Abführung des Heiz- und Kühlmediums zum Zulaufsystem (12) bzw. vom Ablaufsystem (17) über Drehkupplungen (3, 18) im Bereich der Lager des Drehrahmens (2) erfolgt.

7. Vorrichtung nach Anspruch 5 oder 6,
dadurch gekennzeichnet, daß die Form (1) einen Tragrahmen (8) besitzt, der in Richtung der Drehachse hin- und herbewegbar (20) ist und daß die Einlauföffnungen (14) mit dem Zulaufsystem (12) sowie die Auslauföffnungen (15) mit dem Auslaufsystem (17) über bewegliche Leitungen (13, 16) verbunden sind.

8. Vorrichtung nach einem der Ansprüche 5 bis 7,
dadurch gekennzeichnet, daß der Drehrahmen (2) mittels einer Hubvorrichtung (5) in der Querachse verschwenkbar ist.

9. Verfahren zum Herstellen von Formhäuten und -körpern aus Kunststoff mittels einer Vorrichtung nach einem der Ansprüche 1 bis 8,
dadurch gekennzeichnet, daß das Ansetzen des Kastens (26) an die Form (1) das Verschwenken und gegebenenfalls translatorische Bewegen der Form (1) in Axial- und Vertikalrichtung sowie das Temperaturprofil des Heiz- und Kühlmediums unter Programmsteuerung stehen.

10. Verfahren nach Anspruch 9,
dadurch gekennzeichnet, daß das Aufheizen der Form (1) bereits vor und während des Ansetzens des Kastens (16) und das Abkühlen der Form (1) bereits während des Abkoppelns des Kastens erfolgt.

## Claims

1. A device for the production of moulded skins and moulded members from plastics and comprising a mould preferably constructed as an electrotype and having a shaping inner contour and being in the form of a double-walled hollow member (1) for supplying a heating and cooling medium, the device also comprising a box (56) for fitting in sealing-tight manner on the mould (1) and containing plastic material in powder, granulate or liquid form, and a device for rotating the mould (1) and the box (26), characterised in that the double-walled hollow member, at its back wall (7) remote from the inner contour (6), has a number of inlet and outlet openings (14, 15) for the heating and cooling medium,
in that the inlet openings (14) are connected in parallel to a feed system (12) and the outlet openings (15) are connected in parallel to an outlet system (17) and
in that the total outlet cross-section is larger than the total feed cross-section.

2. A device according to claim 1, characterised in that the inlet openings are in the form of injection nozzles (Fig. 2; 14) directed towards the inside of the front wall (6).

3. A device according to claim 1 or 2, characterised in that the arrangement of the inlet openings (14) is irregular.

4. A device according to any of claims 1 to 3, characterised in that the shaping front wall (6) is interchangeably secured to the back wall (7) of the mould (1).

5. A device according to any one of claims 1 to 4, characterised in that the mould (1) together with the feed and discharge system (12 - 17) and the box (26) containing the plastic material are disposed in a rotary frame (2) rotatable around a horizontal axis.

6. A device according to claim 5, characterised in that the heating and the cooling medium are supplied to and discharged from the feed system (12) and the discharge system (17) via rotary joints (3, 18) in the region of the bearings of the rotary frame (2).

7. A device according to claim 5 or 6, characterised in that the mould (1) has a supporting frame (8) which is movable in reciprocation (20) in the direction of the axis of rotation, and in that the inlet openings (14) are connected to the feed system (12) and the outlet openings (15) are connected to the outlet system (17) via movable lines (13, 16).

8. A device according to any one of claims 5 to 7, characterised in that the rotary frame (2) is pivotable about the transverse axis by a lifting device (5).

9. A method of producing moulded skins and moulded members from plastics by means of a device according to any one of claims 1 to 8, characterised by programmed control of attachment of the box (26) to the mould (1), pivoting and optional movement in translation of the mould (1) in the axial and vertical direction, and the temperature profile of the heating and cooling medium.

10. A method according to claim 9, characterised in that the mould (1) is heated before and during attachment of the box (16), and the mould is cooled (1) while the box is being uncoupled.

## Revendications

1. Dispositif de fabrication de peaux moulées et de corps en matière plastique constitué d'un moule réalisé de préférence sous la forme de « galvano », dont le profil effectue la mise en forme, et qui se présente sous la forme d'un corps creux (1) à double paroi pour l'amenée d'un liquide de réchauffement et de refroidissement, d'un châssis (26) applicable de manière étanche sur le moule (1), qui contient de la matière plastique sous forme de poudre, de granulés ou de liquide, et d'un dispositif pour la rotation du moule (1) et du châssis (26), caractérisé en ce que le corps creux à double paroi comporte sur sa paroi arrière (7) opposée au profil intérieur (6) un grand nombre d'orifices d'entrée et de sortie (14, 15) pour le liquide de réchauffement et de refroidissement,
en ce que les orifices d'entrée (14) d'une part et les orifices de sortie d'autre part sont raccordés respectivement en parallèle à un système d'entrée (12) ou un système de sortie (17), et
en ce que la section totale de sortie est supérieure à la section totale d'entrée.

2. Dispositif selon la revendication 1, caractérisé en ce que les orifices d'entrée sont conçus comme des buses d'injection (fig. 2 : 14) qui sont orientées vers l'intérieur de la paroi avant (6).

3. Dispositif selon la revendication 1 ou 2, caractérisé en ce que la disposition des orifices d'entrée (14) est irrégulière.

4. Dispositif selon l'une quelconque des revendications 1 à 3, caractérisé en ce que la paroi avant (6) effectuant la mise en forme (6) est fixée de façon interchangeable sur la paroi arrière (7) du moule (1).

5. Dispositif selon l'une quelconque des revendications 1 à 4, caractérisé en ce que le moule (1) avec les systèmes d'entrée et de sortie (12 à 17) ainsi que le châssis (26) avec la matière plastique est disposé dans un cadre pivotant (2) pivotant autour d'un axe horizontal.

6. Dispositif selon la revendication 5, caractérisé en ce que l'entrée et la sortie du liquide de réchauffement et de refroidissement vers le système d'entrée (12) et à partir du système de sortie (17) s'effectuent par des raccords pivotants (3, 18) dans la zone des paliers du cadre tournant (2).

7. Dispositif selon la revendication 5 ou 6, caractérisé en ce que le moule (1) possède un cadre porteur (8) qui est déplaçable en avant et en arrière (20) en direction de l'axe de pivotement et en ce que les orifices d'entrée (14) sont raccordés au système d'entrée (12) et les orifices de sortie (15) au système de sortie (17) par des conduites mobiles (13, 16).

8. Dispositif selon l'une quelconque des revendications 5 à 7, caractérisé en ce que le cadre pivotant (2) peut être basculé au moyen d'un dispositif de levage (5) dans l'axe transversal.

9. Procédé de fabrication de peaux moulées et de corps en matière plastique au moyen d'un dispositif selon l'une quelconque des revendications 1 à 8,
caractérisé en ce que l'application du châssis (26) sur le moule (1), le pivotement et, le cas échéant, les déplacements de translation du moule (1) dans les sens axial et vertical ainsi que le profil de température du liquide de réchauffement et de refroidissement sont commandés par un programme.

10. Dispositif selon la revendication 9, caractérisé en ce que le réchauffement du moule (1) s'effectue dès avant et pendant l'application du châssis (16) et le refroidissement du châssis (1) s'effectue déjà pendant le désaccouplement du châssis.
